# EUROPEAN PATENT SPECIFICATION

(11) **EP 3 210 820 B1**
(45) Date of publication and mention of the grant of the patent: **07.08.2019**
(21) Application number: 15852709.3
(22) Date of filing: 08.10.2015
(51) Int. Cl.: B60M 3/06, H02J 7/00, B60M 3/02, B60L 50/00, B60L 50/50

(54) **POWER STORAGE DEVICE**
ENERGIESPEICHERVORRICHTUNG
DISPOSITIF D'ACCUMULATION D'ÉNERGIE

(30) Priority: 21.10.2014 JP 2014214264
(43) Date of publication of application: 30.08.2017
(73) Proprietor: Kabushiki Kaisha Toshiba, Minato-ku Tokyo 105-8001 (JP)
(72) Inventor: NOGI, Masayuki, Tokyo 105-8001 (JP); SATAKE, Nobuhiko, Tokyo 105-8001 (JP)
(74) Representative: AWA Sweden AB
(86) International application number: PCT/JP2015/005118
(87) International publication number: WO 2016/063481

(56) References cited:
- EP-A1- 2 676 834
- JP-A- 2006 062 489
- JP-A- 2006 168 390
- JP-A- 2012 105 407
- JP-A- 2012 166 646
- JP-A- 2013 244 799
- US-A1- 2006 113 964

## Description

### FIELD

An embodiment of the present invention relates to a power storage device.

### BACKGROUND

In one of transportation systems causing a vehicle to travel by electric power, for example, there is a railroad, a monorail, or the like causing an electric railcar to travel by a direct-current feeding method, but in a case of such a transportation system, a variation in load with a start/stop of the electric railcar frequently occurs, and a voltage of an overhead line which supplies the electric power to the electric railcar also largely varies.

A power converter such as a diode rectifier is used for the overhead line in general in order to convert alternating-current power sent from an alternating-current power supply system of a substation or the like into a direct current to supply it.

Regenerative electric power is generated at deceleration of the electric railcar. The regenerative electric power is to be retrieved by installing a regenerative inverter. Therefore, when the regenerative inverter is not installed, sufficient load which absorbs the regenerative electric power from the electric railcar is to be installed around the electric railcar.

On the other hand, even though the regenerative inverter is installed, the regenerative electric power causes reverse power flow to a transmission and distribution system of an electric power company as long as load which consumes the electric power regenerated by the regenerative inverter does not exist in a system, and thereby a railroad business operator cannot obtain an effect of reduction in an amount of power to be purchased.

In order to solve such problems, a power storage device which absorbs and stores the regenerative electric power of the electric railcar is sometimes installed on the transportation system. This power storage device is capable of absorbing the regenerative electric power of the electric railcar and also discharging the stored energy. Installation of this power storage device makes it possible to reduce input energy of the substation for feeding.

Further, the power storage device has a function of suppressing a variation in overhead line voltage by a discharge at a time of a decrease in the overhead line voltage and a charge at a time of a rise in the overhead line voltage. A technique of such a power storage device is as follows, for example.

### PRIOR ART DOCUMENT

### PATENT DOCUMENT

Patent Document 1: Japanese Patent No. 5377538
Patent Document 2: Japanese Laid-open Patent Publication No. 2006-062489

### SUMMERRY OF THE INVENTION

### PROBLEMS TO BE SOLVED BY THE INVENTION

In a case of a technique of a power storage device mentioned in Patent Document 1, a base on which charge/discharge characteristics are set is not clarified. Further because Charge_th_low corresponding to a charge start voltage is set to 1620 V, namely a no-load feeding voltage or more of a rectifier of 8% voltage regulation in a feeding system of DC 1500 V, there is a problem that with a rise in a state of charge (SOC: State of Charge) of the power storage device, the charge start voltage rises rather than the no-load feeding voltage in the entire range indicated by the SOC, resulting in a decrease in a regenerative electric power amount from a train.

Further, when there is a no-load feeding voltage variation of the rectifier practically and the no-load feeding voltage rises and when excess regenerative power is excessive, there is a problem that the SOC of a power storage element increases, and the technique in Patent Document 1 is a characteristic which makes the charge start voltage of a storage battery rise and induces regenerative narrowing of the train before setting a discharge characteristic in which the power storage device can discharge sufficiently, and cannot achieve energy-saving charge/discharge control.

Further, the technique in Patent Document 1 exemplifies a charge/discharge method in which a control charge/discharge current is not made to flow, while Patent Document 2 indicates that a charge/discharge start voltage is made variable with an increase and decrease in a charging rate, but in a case of a technique in Patent Document 2, charging rate control for suppressing a biased SOC during operation of a power storage device is incorporated, resulting in occurrence of a wasteful charge/discharge loss for control of the SOC.

Further, when the charge/discharge control which changes a charge start voltage and discharge start voltage according to the SOC is used, it is not indicated that what charge/discharge characteristics to have specifically makes it possible to reduce the charge/discharge loss of a power storage element, suppress a regenerative cancellation sufficiently, and charge and discharge according to a change in a load distribution of a line and an operation state (operating state of rectifier of substation) of a feeding facility.

### MEANS OF SOLVING THE PROBLEMS

A problem to be solved by the present invention is to provide a power storage device capable of improving charge/discharge efficiency of a power storage element, also corresponding to a power supply stop from a substation facility for feeding and a change in a train load distribution on a feeding circuit, and making a state of charge of the power storage element fall within a range of a predetermined state of charge, while suppressing a regenerative cancellation of a vehicle at the maximum.

A power storage device of an embodiment includes a power storage element, a converter, a voltage detecting unit, a charging rate detection unit, a storage unit, and a current control unit. The power storage element is capable of storing power and charging and discharging. The converter converts voltage between a direct-current power supply system and the power storage element. The voltage detecting unit detects a voltage of the direct-current power supply system through the converter. The charging rate detection unit detects a charging rate of the power storage element. The storage unit stores a table defining, in sectional ranges of a charging rate in which a charging rate indicating a range of an amount of charge in which the power storage element is capable of storing power is divided into some sections, a charge characteristic in which any one or more of a first voltage in which charge is started and a second voltage in which charge is started with a maximum current are represented and a discharge characteristic in which any one or more of a third voltage in which discharge is started and a fourth voltage in which discharge is started with a maximum current are represented. The current control unit selects a characteristic according to a charging rate of the power storage element which is detected by the charging rate detection unit from the table, sets each voltage of a selected characteristic at a control point of a charge/discharge control characteristic for charging and discharging to/from the power storage element, and performs charge and discharge between the direct-current power supply system and the power storage element through the converter according to a voltage of the direct-current power supply system which is detected by the voltage detecting unit in accordance with the charge/discharge control characteristic. In the storage unit, for each of the sectional ranges of the charging rate, a control characteristic which makes setting of the control points of the first voltage to the fourth voltage variable to an upward trend or a downward trend is defined.

### BRIEF DESCRIPTION OF THE DRAWINGS

FIG. 1 is a diagram illustrating a configuration of an electric railcar power feeding system of an embodiment.
FIG. 2 is a chart illustrating a control characteristic which performs charge/discharge control of a power storage element according to a variation in a voltage of a feeder line.
FIG. 3 is a characteristic chart illustrating a relationship between a charging rate and voltages of control points.

### DETAILED DESCRIPTION

Hereinafter, an embodiment will be described in detail referring to the drawings.

### (Embodiment)

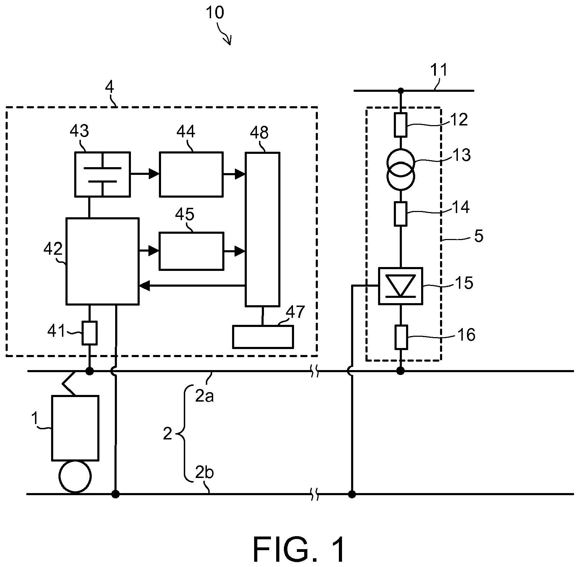

FIG. 1 is a diagram illustrating a configuration of an electric railcar power feeding system of an embodiment.

The electric railcar power feeding system is a power feeding system of a direct-current feeding type which feeds direct-current power from a substation through a feeding circuit to a vehicle in transportation such as a railroad or a monorail, for example, an electric railcar or the like.

As illustrated in FIG. 1, an electric railcar power feeding system 10 of the embodiment is constituted by connecting a power storage device 4 and a substation facility 5 of a substation via a feeding circuit 2. The feeding circuit 2 is a direct-current power supply system having a feeder line 2a (overhead line or power line) and a rail 2b (return wire or return feeder).

The substation facility 5 is installed, for example, every 5 km or at every station of the railroad, the monorail, or the like. As illustrated in FIG. 1, the substation facility 5 connects an alternating-current circuit breaker 12, a transformer 13, a normal alternating-current circuit breaker 14, a rectifier 15, and a direct-current circuit breaker 16 between the feeding circuit 2 (direct-current power supply system) and an alternating-current power supply system 11.

The alternating-current circuit breaker 12 electrically connects or disconnects the alternating-current power supply system 11 which is a commercial power supply and the transformer 13 to/from each other, for example. The above-described alternating-current power supply system 11 is a normal power supply of an alternating-current system for direct-current feeding.

The transformer 13 varies a voltage of the alternating-current power supply system 11 to a voltage for the feeding circuit 2. The alternating-current circuit breaker 14 electrically connects or disconnects the transformer 13 and the rectifier 15 to/from each other.

The rectifier 15 is, for example, a diode rectifier or a PWM converter, and is an AC/DC converter which converts an alternating current to a direct current. In other words, the rectifier 15 converts electric power of the alternating-current power supply system 11 whose voltage is converted in the transformer 13 to direct-current power and supplies the direct-current power to the feeding circuit 2.

The direct-current circuit breaker 16 electrically connects or disconnects the feeding circuit 2 and the rectifier 15 to/from each other. Note that the above substation facility 5 need not necessarily be collectively arranged in the same position or casing.

An electric railcar 1 travels by receiving supply of the direct-current power from a side of the substation facility 5 via the feeding circuit 2. All electric rolling stocks, which travel using electricity as a driving source such as a vehicle used for the monorail, a vehicle used for the railroad, and an electric vehicle, correspond to the electric railcar 1.

The rail 2b is a conductor which pairs off with the feeder line 2a and through which a return current flows. Note that for a transportation system which travels with, for example, rubber wheels other than the rail 2b, part of subway, and the like, a dedicated conductor through which the return current flows is installed as the return feeder instead of the rail 2b.

In this example, the feeder line 2a and the rail 2b constitute the feeding circuit 2, but a method of adopting a third rail system or a fourth rail system, or a system constituted by not a feeder line but only a trolley wire is also applicable.

Meanwhile, the power storage device 4 is arranged, for example every 3 km or the like in a distributed manner, and installed at a distance from a position of the substation facility 5.

As illustrated in FIG. 1, the power storage device 4 is connected to the feeding circuit 2 (the feeder line 2a and the rail 2b). The power storage device 4 includes a direct-current circuit breaker 41, a converter 42, a power storage element 43, a charge state detection unit 44, a direct-current voltage detecting unit 45, a table 47, and a charge/discharge control unit 48. The table 47 is stored by a memory. The charge/discharge control unit 48 is put into practice by a central processing unit (CPU).

The direct-current circuit breaker 41 electrically connects or disconnects the converter 42 and the feeder line 2a to/from each other. The converter 42 exchanges electric power between the feeder line 2a and the power storage element 43.

The converter 42 is constituted of a step-up/down chopper circuit (buck-boost Converter) which gate-drives, for example, a switching element, or the like and converts voltage between the feeder line 2a and the power storage element 43. Further, the converter 42 adjusts current to the power storage element 43 by being controlled by the charge/discharge control unit 48 to perform charge/discharge operation.

In the converter 42, an element which is applied to the converter 42 is, for example, a self-arc-extinguishing element such as an IGBT (Insulated Gate Bipolar Transistor), and charge and discharge to/from the power storage element 43 are performed by PWM (Pulse Width Modulation) driving this type of element.

The converter 42 has a function of a DC/DC converter as long as the power storage element 43 is, for example a storage battery or a condenser, and further the converter 42 is formed as a one having a function of an inverter which enables DC/AC conversion as long as the power storage element 43 is, for example, a flywheel.

The power storage element 43 is, for example, a storage battery such as a lithium-ion battery, a nickel-metal hydride battery, or a lead-acid battery, or an energy storage element such as an electric double layer capacitor, or a flywheel. The power storage element 43 is capable of charging with current from the feeder line 2a (direct-current power supply system) and discharging to the feeder line 2a (direct-current power supply system).

The direct-current voltage detecting unit 45 detects a voltage (direct-current voltage) of the feeder line 2a through the converter 42 and notifies the charge/discharge control unit 48, for example. Note that a direct-current voltage which the charge/discharge control unit 48 uses for charge/discharge control may be, for example, a voltage of a detector connected via an LC filter or the like with respect to the voltage of the feeder line 2a besides the voltage of the feeder line 2a in this example.

The charge/discharge state detection unit 44 detects a state of charge (SOC) of the power storage element 43 as a charging rate [%]. The charge/discharge state detection unit 44 measures an amount of charge from a voltage of the power storage element 43, and substitutes the charging rate [%] by allocation to a range of "0" (zero) to 100% based on a preset conversion table (not illustrated). That is, the charge/discharge state detection unit 44 is a charging rate detection unit which detects the charging rate of the power storage element 43.

Note that a SOE (State of Energy) which indicates a state of charge may be used besides the SOC. The SOE is a one in which present charged energy is divided by maximum chargeable energy and different from, for example, a one defined by Ah represented by the SOC of the storage battery.

The charge/discharge control unit 48 selects a characteristic according to the charging rate of the power storage element 43 which is detected by the charging rate state detection unit 44 from the table 47.

The charge/discharge control unit 48 functions as a current control unit which sets each voltage of a selected characteristic at a control point of a charge/discharge control characteristic for charging and discharging to/from the power storage element 43 and performs charge and discharge between the feeder line 2a and the power storage element 43 through the converter 42 according to the voltage (direct-current voltage) of the feeder line 2a which is detected by the direct-current voltage detecting unit 45 in accordance with the charge/discharge control characteristic.

That is, the charge/discharge control unit 48 controls charge/discharge currents (charge current and discharge current) which the converter 42 inputs/outputs with respect to the power storage element 43 from the feeder line 2a while controlling operation of the direct-current circuit breaker 41 based on the voltage (direct-current voltage) of the feeder line 2a which is detected by the direct-current voltage detecting unit 45.

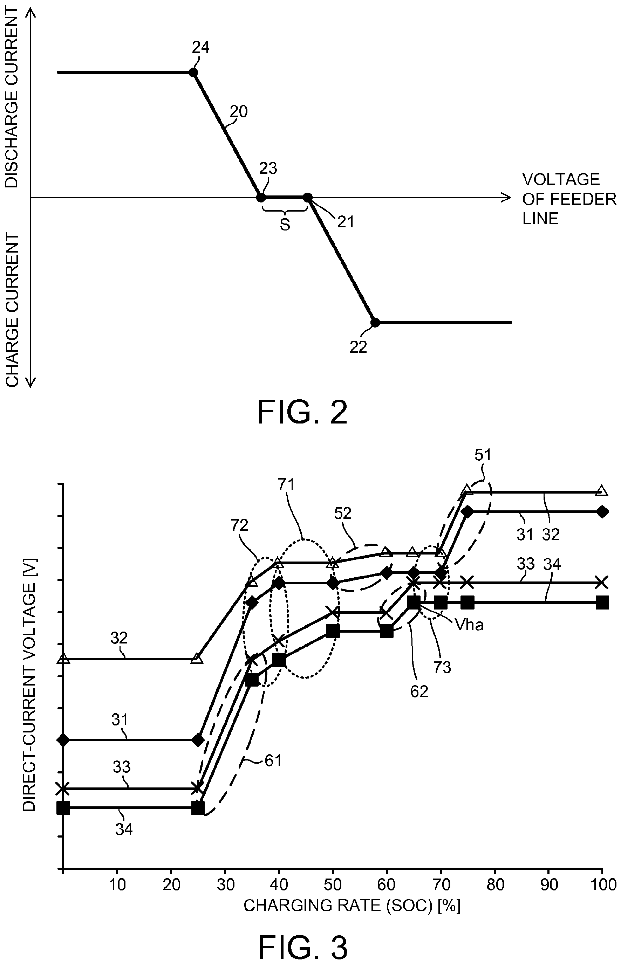

The charge/discharge control unit 48 has a control graph 20 (control sequence or control function) for performing the charge and discharge appropriately according to the voltage of the feeder line 2a as illustrated in FIG. 2 and adjusts the charge/discharge currents (charge current and discharge current) in accordance with this control graph 20.

FIG. 2, in which the voltage of the feeder line 2a is set for a horizontal axis and the charge current and the discharge current which flow to/from the power storage element 43 are set for a vertical axis, is a chart illustrating a control characteristic (control graph) of the charge/discharge control unit 48 for making the charge current flow to the power storage element 43 according to a change in the voltage of the feeder line 2a or making the power storage element 43 discharge the discharge current. In other words, this control characteristic indicates a relationship between the voltage of the feeder line 2a which is detected from the power storage element 43, and the charge current and the discharge current with respect to the power storage element 43.

In the control graph 20 in the same figure, four switching points (hereinafter referred to as "control point") for the charge/discharge control are set. A control point 21 is a point where the charge is started. A control point 22 is a point where the charge current becomes maximum at a time of the charge. A control point 23 is a point where the discharge is started. A control point 24 is a point where the discharge current becomes maximum at a time of the discharge.

That is, when the voltage of the feeder line 2a becomes lower than a prescribed value (a range S of a central portion of the graph horizontal axis) and reaches the control point 23 of the voltage where the discharge is started, an output current from the power storage element 43 is increased (discharged) by changing load, and the discharge is continued as it is and reaches the control point 24 of the voltage where the discharge current becomes maximum and thereafter control is performed so that the discharge current is outputted while maintaining a maximum value.

On the other hand, when the voltage of the feeder line 2a becomes higher than the prescribed value (the range S of the central portion of the graph horizontal axis) and reaches the control point 21 of the voltage where the charge is started, the charge current to the power storage element 43 is increased and reaches the control point 22 of the voltage where the charge current becomes maximum, and thereafter control is performed so that the charge current is charged while maintaining a maximum value. Note that this table characteristic may be represented by a control block using a mathematical expression, a limiter, or the like.

The table 47 is referred to by the charge/discharge control unit 48. The charge/discharge control unit 48 reads out a voltage to set at each of the control points 21 to 24 from the table 47 according to the detected charging rate of the power storage element 43 and changes the control characteristic by setting the read-out voltage on the control graph 20 in FIG. 2.

In the table 47, voltages 31 to 34 which are set at the above-described four control points 21 to 24 in FIG. 2 are stored corresponding to a value of the charging rate.

In the table 47, in sectional ranges of the charging rate in which the charging rate indicating a range of an amount of charge in which the power storage element 43 is capable of storing power is divided into some sections, a charge characteristic in which any one or more of a first voltage 31 in which the charge is started and a second voltage 32 in which the charge is started with a maximum current are represented and a discharge characteristic in which any one or more voltages of a third voltage 33 in which the discharge is started and a fourth voltage 34 in which the discharge is started with a maximum current are represented are set (defined).

That is, this table 47 is a table which represents a relationship between the voltage 31 in which the charge is started, the voltage 32 in which the charge is performed with a maximum charge current, the voltage 33 in which the discharge is started, and the voltage 34 in which the discharge is performed with a maximum discharge current, and the charging rate.

Graphs in which the voltages 31 to 34 are each connected in accordance with a change in the charging rate become four sequential line graphs (characteristics) as illustrated in FIG. 3.

FIG. 3, in which the charging rate of the power storage element 43 is set for a horizontal axis and a direct current detected from the power storage element 43 is set for a vertical axis, is a chart illustrating control a characteristic for making the charge current or the discharge current flow according to a change in the voltage of the feeder line 2a and performing the charge and discharge with respect to the power storage element 43.

The control characteristic is defined by four control curves. The control curves are stored in the memory. The control curves in FIG. 3 are ones which define the control characteristic which make setting of the control points 21 to 24 of the respective first voltage 31 to fourth voltage 34 variable to an upward trend or a downward trend for each of the sectional ranges of the charging rate.

In each of the sequential line graphs, ranges (charge range, discharge range, and charge/discharge range) of the charging rate determined by the voltages 31 to 34 set at the control points 21 to 24 for each of the sectional ranges (sectional band or sectional region) of the charging rate in which the charging rate of "0" (zero) to 100% indicating a range of the amount of charge in which the power storage element 43 is capable of storing power is divided into some sections are set.

Specifically, the sectional ranges (operating ranges of the power storage element 43) of the charging rate are divided into, for example, "0" (zero)-25%, 25-35%, 35-40%, 40-50%, 50-60%, 60-65%, 65-70%, 70-75%, 75-100%, and so on.

In the table 47, the voltages 31 to 34 which are set at the control points 21 to 24 in FIG. 2 are stored for each of the values of the charging rate each divided.

The voltage 31 which is set at the control point 21 is the voltage in which the charge is started, and this is referred to as a first voltage. The voltage 32 which is set at the control point 22 is the voltage (the voltage in which the charge is started with the maximum current) in which the charge current becomes maximum at a time of the charge, and this is referred to as a second voltage. The voltage 33 which is set at the control point 23 is the voltage in which the discharge is started, and this is referred to as a third voltage. The voltage 34 which is set at the control point 24 is the voltage (the voltage in which the discharge is started with the maximum current) in which the discharge current becomes maximum at a time of the discharge, and this is referred to as a fourth voltage.

The charge/discharge control unit 48 performs the charge and discharge with respect to the power storage element 43 by reading out the first voltage to the fourth voltage corresponding to the charging rate detected by the charge state detection unit 44 from the table 47, using the read-out first voltage to fourth voltage, and controlling the current of the converter 42 according to the voltage detected by the direct-current voltage detecting unit 45.

In carrying out this control operation, which may be realized in combination of either the voltage 33 in which the discharge is started or the voltage 34 in which the discharge current becomes maximum at a time of the discharge, and either the voltage 31 in which the charge is started or the voltage 32 in which the charge current becomes maximum at a time of the charge.

Specifically, as illustrated in FIG. 3, each of the voltages 31 to 34 remains constant without changing in the "0" (zero)-25% range of the charging rate.

In the 25-35% range, a first discharge characteristic 61 as a range of a second charging rate is set. This first discharge characteristic 61 includes a discharge characteristic (a characteristic indicating a downward trend) in which the voltage 33 in which the discharge is started and the voltage 34 in which the discharge is started with the maximum current decrease with a decrease (from 35% to 25%) in the charging rate (SOC).

In the 35-40% sectional range, second charge/discharge characteristics 72 as a range of a sixth charging rate are set. These second charge/discharge characteristics 72 include a discharge characteristic (a characteristic indicating an upward trend) in which the voltage 33 in which the discharge is started and the voltage 34 in which the discharge is started with the maximum current increase with an increase in the SOC between a first charge characteristic 51 and the first discharge characteristic 61, and a charge characteristic (an increase characteristic) in which the voltage 31 in which the charge is started and the voltage 32 in which the charge is started with the maximum current increase with the increase in the SOC in the same sectional range of the SOC where the above-described discharge is set.

These second charge/discharge characteristics 72 are charge/discharge characteristics for suppressing the voltage of the feeder line 2a at a time of a decrease in the voltage of the feeder line 2a by a charge from the rectifier 15 to the power storage element 43. If load targeted for discharge becomes large, the SOC of the storage battery decreases. At this time a charge start voltage is set to a voltage lower than a feeding voltage of the rectifier 15, and a decrease in the SOC is suppressed by the charge from the rectifier 15.

Further, a discharge start voltage shifts to a difficult-to-discharge voltage because it also decreases due to the decrease in the SOC, to become a voltage at which discharge is performed when a voltage drop of the feeder line 2a is large. The decrease in the SOC is also suppressed by this effect.

Further, setting these second charge/discharge characteristics 72 allows the charge from the rectifier 15 when the voltage of the feeder line 2a is high and the discharge when the voltage of the feeder line 2a is low, and allows suppression of a voltage decrease of the feeder line 2a as a whole.

Improving the decrease in the voltage of the feeder line 2a makes it possible also to suppress a current which flows through the feeder line 2a and also to suppress a resistance loss (feeding loss) generated by the current flowing through the feeder line 2a and the trolley wire, and the rail 2b (return wire).

These second charge/discharge characteristics 72 are, namely, operation of inputting energy from the rectifier 15 to the power storage element 43 and further discharging when the voltage of the feeder line 2a drops, and cause occurrence of a charge/discharge loss of the power storage element 43 qualitatively, resulting in poor efficiency.

However, when it is intended to suppress the voltage decrease of the feeder line 2a as a functional requirement for the power storage element 43 and when the feeding loss is larger than a loss of the power storage element 43 and it is possible to reduce the feeding loss, application thereof is possible.

In the 40-50% sectional range, first charge/discharge characteristics 71 as a range of a fifth charging rate are set. These first charge/discharge characteristics 71 include a characteristic indicating either or both upward trends of a characteristic in which the voltage 33 in which the discharge is started rises and a characteristic in which the voltage 34 in which the discharge is started with the maximum current rises, with an increase in the charging rate between the first charge characteristic 51 and the first discharge characteristic 61.

Further, these first charge/discharge characteristics 71 have characteristics (characteristics in which the voltage 31 and the voltage 32 remain parallel) in which the voltage 31 at which the charge is started and the voltage 32 at which the charge is started with the maximum charge current become constant regardless of a change in the SOC in the same sectional range corresponding to these voltages 33 and 34 with the upward trend.

For example, the charge start voltage 31 at this time is a no-load feeding voltage of the rectifier 15. The charge is performed at a voltage of the same level as that of the no-load feeding voltage of the rectifier 15 by setting these charge/discharge characteristics 71, thereby making it possible to charge regenerative electric power from a more distant electric railcar and allowing an inhibitory effect on a regeneration lapse to be enhanced.

Further, even though a charge power amount increases, the discharge characteristic which is set in these charge/discharge characteristics 71 and in which the voltage 33 in which the discharge is started and the voltage 34 in which the discharge is started with the maximum current increase with the increase in the SOC makes it possible to increase a discharge power amount and stabilize the SOC.

Even though a SOC rise is not suppressed by the characteristic of the range which is set at this time, the SOC rise can be suppressed by the above-described second charge characteristic 52 and second discharge characteristic 62 further.

The voltage 33 in which the discharge is started in the sectional range of these first charge/discharge characteristics 71 can be set to almost the same voltage as the no-load feeding voltage of the rectifier 15 at the maximum. Further, a minimum discharge start voltage when the SOC is low is set along a purpose for which the device is set.

For example, in a case of the functional requirement for the power storage element 43 which necessarily assists a region where a current which the rectifier 15 outputs is 1 p.u. or more, a voltage at 1 p.u., namely, 1500 V in a DC 1500 V feeding system is set as a minimum set value. When there is no requirement of the assist in particular, this minimum value may be set to a lower limit voltage of travel of a train, for example, to the same level as 850 V to 900 V or the level or less in a case of a DC 1500 V-system train.

In the 50-60% sectional range, the second charge characteristic 52 as a range of a fourth charging rate is set. This second charge characteristic 52 includes a charge characteristic (a characteristic indicating an upward trend) in which the voltage 31 in which the charge is started and the voltage 32 in which the charge is started with the maximum current increase with an increase in the SOC between the first charge characteristic 51 and the first discharge characteristic 61.

Setting this second charge characteristic 52 allows corresponding to a variation in the no-load feeding voltage of the rectifier 15 on a side of the substation facility 5 connected to the feeding circuit 2.

For example, when the no-load feeding voltage of the rectifier 15 increases, the voltage of the feeding circuit 2 rises and the charge of the power storage element 43 becomes easy to increase the SOC. Here, as long as a constant charge start voltage is maintained regardless of the SOC, charge/discharge operation is performed by the first charge characteristic 51 or the second discharge characteristic 62 sometime, thereby inducing a rise in the voltage 31 in which the charge is started due to the increase in the SOC and causing operation of a quick discharge of a current charged from the rectifier 15, resulting in wasteful charge/discharge operation as the power storage device 4.

As a result, regenerative narrowing-down control is induced with respect to the electric railcar 1, a battery temperature rises due to occurrence of the charge/discharge loss of the power storage element 43, and an amount of input power of the rectifier 15 of the substation facility 5 increases.

However, by setting the second charge characteristic 52, the charge from the rectifier 15 is suppressed from the rise in the voltage 31 in which the charge is started, according to the rise in the SOC. This makes it possible to suppress the occurrence of the charge/discharge loss of the power storage element 43 and the induction of the regenerative narrowing-down control as described above.

As a specific set value, when the feeding system of DC 1500 V is cited as one example, a characteristic in which the voltage 31 in which the charge is started increases to 1590 V to 1620 V or about 1650 V according to the increase in the SOC is cited.

1590 V corresponds to the no-load feeding voltage of the rectifier 15, and 1620 V to 1650 V are maximum values of a no-load feeding voltage variation which occurs due to a voltage variation of the alternating-current power supply system 11 which is inputted to the rectifier 15.

That is, a characteristic of assuming the voltage variation of the alternating-current power supply system 11 and changing the charge start voltage to almost the same level as that of the maximum value of the no-load feeding voltage variation of the rectifier 15 connected to the feeding circuit 2 or the level or more is set.

In the 60-65% sectional range, the second discharge characteristic 62 as a range of a third charging rate is set. This second discharge characteristic 62 indicates a discharge characteristic (a characteristic indicating an upward trend) in which the voltage 33 in which the discharge is started and the voltage 34 in which the discharge is started with the maximum current increase with an increase in the SOC in a range (range of SOC) sandwiched between the first discharge characteristic 61 and the first charge characteristic 51.

That is, this second discharge characteristic 62 is between the first discharge characteristic 61 and the first charge characteristic 51, and the voltage 33 indicates the upward trend and the voltage 34 also indicates a trend of rising until the discharge current reaches a maximum voltage (a voltage VHa which reaches a maximum discharge current in FIG. 3) together. Note that the upward trends of the voltages 33 and 34 in this second discharge characteristic 62 may be either of the voltages.

By setting this second discharge characteristic 62, the voltage 33 in which the discharge is started increases with the increase in the charging rate to make the discharge easy, thereby allowing the suppression of the rise in the SOC.

Because setting the first charge characteristic 51 and the second discharge characteristic 62 in reverse order with respect to the SOC causes a rise in the charge start voltage in advance with the SOC rise, resulting in inducing the regenerative narrowing-down control of a train, it is inappropriate from the viewpoint of an energy-saving effect and an effect of regenerative cancellation suppression.

Therefore, it is necessary to set the second discharge characteristic 62 in a range (range of SOC) of the charging rate lower than that of the first charge characteristic 51.

As a specific set value, in a case of the feeding system of DC 1500 V, a maximum value of the voltage 33 in which the discharge is started becomes almost the same as the no-load feeding voltage, for example, about 1590 V. An error of the direct-current voltage detecting unit 45 is assumed practically, and a value lower than the above value may be set.

In the 65-70% sectional range, third charge/discharge characteristics 73 as a range of a seventh charging rate are set. These third charge/discharge characteristics 73 indicate such charge/discharge characteristics (characteristics in which the voltage 31 and the voltage 32 on the charge side and the voltage 33 and the voltage 34 on the discharge side remain parallel) as keep the voltage 33 at which the discharge is started, the voltage 34 at which the discharge is started with the maximum current, the voltage 31 at which the charge is started, and the voltage 32 at which the charge is started with the maximum current constant regardless of a change in the SOC between the above-described second discharge characteristic 62 and first charge characteristic 51. In other words, these third charge/discharge characteristics 73 have a characteristic in which the voltage 31 and/or the voltage 32 and the voltage 33 and/or the voltage 34 become constant voltages.

For example, when the rise in the SOC is not suppressed by the second discharge characteristic 62, the above makes it possible to operate the power storage element 43 without entering the sectional range (range of SOC) of the first charge characteristic 51 by, not starting a quick charge by the first charge characteristic 51 but discharging at the voltage 34 at which the discharge is started with the maximum current and at this time maintaining a characteristic of charging at the charge start voltage 31 which is capable of setting and as low as possible. It is expected that by setting these charge/discharge characteristics 73, a rise in the voltage 31 at which the charge is started is suppressed and a regenerative cancellation is suppressed.

In the 70-75% sectional range, the first charge characteristic 51 as a range of a first charging rate is set. This first charge characteristic 51 includes a characteristic (a characteristic indicating an upward trend) in which the voltage 31 in which the charge is started and the voltage 32 in which the charge is started with the maximum current increase with an increase in the SOC.

The 75-100% sectional range is a range where each of the voltages 31 to 34 does not change to become a constant voltage (parallel characteristic).

As described above, in the table 47, the ranges of the charge characteristic, the ranges of the discharge characteristic, and the ranges of the charge/discharge characteristics are set so as to become an arrangement relationship of the first discharge characteristic 61, the second charge/discharge characteristics 72, the first charge/discharge characteristics 71, the second charge characteristic 52, the second discharge characteristic 62, the third charge/discharge characteristics 73, and the first charge characteristic 51 in order of increasing the SOC.

At this time, it is not necessary to set all the ranges of the described-above ranges, the ranges of the charge and discharge may be set using at least one or more ranges out of the above-described respective characteristic ranges besides the first discharge characteristic 61 and the first charge characteristic 51.

Such setting of the arrangement relationship of the ranges with respect to the SOC allows feeder line voltage compensation when the voltage of the feeder line 2a decreases, suppression of the regenerative cancellation by setting the charge start voltage which is as low as possible, correction of the charge start voltage with the no-load feeding voltage variation of the rectifier 15, suppression of a charging rate rise which occurs when excessive regenerative electric power is charged, and the like.

Moreover, even though power feeding from a feeding facility close to the power storage device 4, for example, the substation facility 5 stops (fall-off of substation or the like) and a voltage variation becomes large, charging and discharging in a low SOC range by the charge/discharge control of this embodiment makes it possible to continuously change a characteristic to charge/discharge characteristics which compensate for overhead line voltage.

Further, even though load density is changed by disorder of an operation diagram of the electric railcar 1, the ranges of the charge/discharge characteristics in accordance with a load characteristic of the feeding circuit 2 are continuously arranged (set) from an inactive state to a high-load state similarly, and therefore it becomes possible to efficiently perform charge and discharge of the power storage element 43.

In the above embodiment, the SOC is described as the charging rate, but when the power storage element 43 is, for example, a capacitor, a terminal voltage of the capacitor can be substituted, or when the power storage element 43 is, for example, a flywheel, rotation speed of a rotary body thereof which is an energy storage element can be substituted.

Further, in the above-described embodiment, the set value or the like is described regarding the direct-current feeding system of DC 1500 V specifically, and in a similar point of view, application to, for example, a direct-current feeding system of DC 750 V, DC 600 V, or the like is also possible.

Note that the above-described sectional ranges of the charging rate indicate a manner of dividing the charging rate as one example, and the manner of dividing the charging rate is not limited to this example.

In other words, in the table 47, the charge ranges, the discharge ranges, and the charge/discharge ranges having characteristics different from each other are stored for each of the sectional ranges of the charging rate [%] of the power storage element 43 which changes according to the voltage variation of the alternating-current power supply system 11, for example.

The charge/discharge control unit 48 determines (selects) the charge range, the discharge range, and the charge/discharge range according to the sectional ranges (operation ranges) of the charging rate of the power storage element 43 by referring to the table 47 when the charging rate is detected. The charge/discharge control unit 48 executes charge or discharge of the power storage element 43 by controlling current of the charge and discharge in the charge ranges, the discharge ranges, and the charge/discharge ranges determined (selected) by the charge/discharge control unit 48.

When a voltage in an amount range of charge and discharge according to the state of charge of the power storage element 43 is instructed by the charge/discharge control unit 48, the charge/discharge control unit 48 sets the instructed voltage at each of the control points 21 to 24 on the control graph of the charge and discharge illustrated in FIG. 2 and executes the charge or the discharge of the power storage element 43 by the charge current or the discharge current according to a value of the voltage (direct-current voltage) of the feeder line 2a.

Specifically, when the value of the voltage (direct-current voltage) of the feeder line 2a is less than and equal to the voltage of the control point 23 in which the discharge is started, the discharge of the power storage element 43 is executed at a current value corresponding to the control point 23.

Further, when the value of the voltage (direct-current voltage) of the feeder line 2a is more than and equal to the voltage of the control point 21 in which the charge is started, the charge/discharge control unit 48 executes the charge of the power storage element 43 by making current flow into the power storage element 43 at a current value corresponding to the control point 21.

Moreover, when the value of the detected voltage (direct-current voltage) of the feeder line 2a exceeds the control point 23 and is below the control point 21, the charge/discharge control unit 48 stops the charge and discharge. Further, when the value of the voltage of the feeder line 2a, which exceeds the control point 23 of the discharge and is below the control point 21 of the charge, continues for a predetermined time, the charge/discharge control unit 48 stops the charge and discharge.

In other words, a voltage range S of the voltage of the feeder line 2a in FIG. 2 indicates a voltage range (a voltage range where gate block is performed by stopping the converter 42) where the charge and discharge are not performed to/from the power storage element 43.

Note that not only the voltage of the feeding circuit 2 may be detected, but also the charge and discharge may be stopped when a value of current or a value of electric power which flows through the feeding circuit 2 is detected and the current value or the electric power value exceeds the control point 23 of the discharge and is below the control point 21 of the charge.

Further, besides this, when the value of the current or the value of the electric power which flows through the feeding circuit 2, which exceeds a discharge threshold and is below a charge threshold, which are made to correspond to the value of the current or the value of the electric power, continues for a predetermined time, the charge/discharge control unit 48 may determine to stop the charge and discharge.

The charge/discharge control unit 48 selects (determines) the corresponding charge range, discharge range, and charge/discharge range by using the charging rate of the power storage element 43 which is detected by the charge/discharge state detection unit 44 as a key and referring to the table 47.

In other words, the charge/discharge control unit 48 selects the charge/discharge range stored (set) in the table 47 in advance based on the detected charging rate of the power storage element 43 and notifies (instructs) the charge/discharge control unit 48. Thereby, the charge/discharge control unit 48 sets each voltage of the selected charge/discharge range at each of the control points 21 to 24 illustrated in FIG. 2 and adjusts the current which flows through the feeding circuit 2 according to the detected voltage of the feeder line 2a, namely, performs the charge or the discharge of the power storage element 43 by the converter 42.

According to the electric railcar power feeding system 10 of this embodiment as described above, by setting the charge ranges, the discharge ranges, and the charge/discharge ranges in the table 47 in advances so as to become the arrangement relationship of the first discharge characteristic 61, the second charge/discharge characteristics 72, the first charge/discharge characteristics 71, the second charge characteristic 52, the second discharge characteristic 62, the third charge/discharge characteristics 73, and the first charge characteristic 51 in order of increasing the SOC, detecting a charging rate of the power storage element 43, selecting a range according to the charging rate from the table 47, setting the respective voltages of the range on the control graph 20 (charge/discharge control information) illustrated in FIG. 2, and performing charge and discharge between a voltage of the feeder line 2a and the power storage element 43 through the converter 42 according to the voltage of the feeder line 2a in accordance with the control graph 20, the following effect is obtained.
1) Suppressing unnecessary charge and discharge without making a control charge/discharge current for keeping the SOC constant flow makes it possible to suppress a wasteful charge/discharge cycle and reduce the charge/discharge loss.
2) It is possible to follow a change in a load condition of the substation facility 5 and the electric railcar 1, and even when a stop of the rectifier 15, a change in the number of operations of the rectifier 15, a tap change in the transformer, and the like are performed, stable operation is possible without changing a setting value.
3) Because it is possible to absorb the regenerative electric power from the vicinity of the no-load feeding voltage of the rectifier 15 and perform charge operation, it becomes possible to charge the regenerative electric power from the electric railcar 1 which is on rail at a distance.
4) Because operation of the converter 42 is observed constantly and narrowing-down control of charge/discharge electric power is performed in an overload, a stop of the power storage device 4 due to the overload can be deterred and operation can be performed at a high operating rate.

That is, performing minute control of the charge and discharge in a practical band in power storage capacity of the power storage element 43 makes it possible to reduce the charge/discharge loss of the power storage element 43, suppress the regenerative cancellation sufficiently, and perform the charge and discharge according to a change in a load distribution of the feeding circuit 2 with operation of the electric railcar 1 and an operation state (operating state of rectifier of substation) of the substation facility 5.

As a result, it is possible to provide the power storage device 4 capable of improving charge/discharge efficiency of the power storage element 43, also corresponding to a power feeding stop from the substation facility for feeding and a change in a train load distribution on the feeding circuit 2, and making the state of charge of the power storage element 43 fall within a range of a predetermined state of charge, while suppressing the regenerative cancellation of the vehicle 1 at the maximum.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the claims. The accompanying claims are intended to cover such forms or modifications as would fall within the scope of the invention

Further, at least one component in the power storage device 4 indicated in the above-described embodiment may be realized by a program installed in storage of a hard disk device of a computer, or the like, and further, the computer may enable a function of this invention by storing the above-described program in a computer-readable electronic medium: electric media and making the computer read the program from the electronic medium. The electronic medium includes, for example, a recording medium such as a CD-ROM and a flash memory, removable media: Removable media, and the like. Moreover, the components are distributed and stored in different computers connected via a network and the respective components communicate with each other between the functional computers, and thereby the components may by realized.

### EXPLANATION OF REFERENCE NUMERALS

1 ... electric railcar, 2 ... feeding circuit, 2a ... feeder line, 2b ... rail, 4 ... power storage device, 5 ... substation facility, 10 ... electric railcar power feeding system, 1 1 ... alternating-current power supply system, 12 ... alternating-current circuit breaker, 13 ... transformer, 14 ... alternating-current circuit breaker, 15 ... rectifier, 16 ... direct-current circuit breaker, 41 ... direct-current circuit breaker, 42 ... converter, 42 ... conversion unit, 43 ... power storage element, 44 ... charge state detection unit, 44 ... charge/discharge state detection unit, 45 ... direct-current voltage detecting unit, 47 ... table, 48 ... charge/discharge control unit.

## Claims

1. A power storage device comprising:
a power storage element (43) capable of storing power and charging and discharging;
a converter (42) converting voltage between a direct-current power supply system and the power storage element;
a voltage detecting unit (45) detecting a line voltage of the direct-current power supply system through the converter;
a charging rate detection unit (44) detecting a state of charge of the power storage element as a charging rate [%];
a storage unit which stores a table (47) defining a relationship between a line voltage and state of charge for charge and discharge characteristics (31, 32, 33, 34) where each of the characteristics are set in sectional ranges of state of charge the sectional ranges indicating a range of charge amount capable of storing power to the power storage element, the charge characteristic (51) indicating a first voltage (31) to start charging and/or a second voltage (32) to start charging with a maximum current, the discharge characteristic (61; 62) indicating a third voltage (33) to start discharging and/or a fourth voltage (34) to start discharging with a maximum current; and
a current control unit (48) selecting a characteristic according to the state of charge of the power storage element detected by the charging rate detection unit and the line voltage detected by the voltage detecting unit from the table, setting each voltage defined in the selected characteristic as a control point (21; 22; 23; 24) of a charge/discharge control characteristic for charging and discharging to/from the power storage element, and performing charge and discharge between the direct-current power supply system and the power storage element through the converter according to the line voltage of the direct-current power supply system detected by the voltage detecting unit in accordance with the charge/discharge control characteristics,
wherein the table (47) includes:
a first charge characteristic (51) in the 70-75% sectional range including a characteristic to rise the first voltage (31) as the state of charge increases and/or a characteristic to rise the second voltage (32) as the state of charge increases;
a first discharge characteristic (61) in the 25-35% sectional range including a characteristic to drop the third voltage (33) as the state of charge decreases and/or a characteristic to drop the fourth voltage (34) as the state of charge decreases; and
a second discharge characteristic (62) in the 60-65% sectional range provided between the first charge characteristic (51) and the first discharge characteristic (61) and including both of a characteristic to rise the third voltage (33) as the state of charge increases and a characteristic to rise the fourth voltage (34) up to a maximum discharge start voltage as the state of charge increases.

2. The power storage device according to claim 1, wherein the table further includes a third charge/discharge characteristic (73) provided between the second discharge characteristic (62) and the first charge characteristic (61) to maintain: the first voltage (31) and/or the second voltage (32); and the third voltage (33) and/or the fourth voltage (34) constant regardless the state of charge.

## Patentansprüche

1. Leistungsspeichervorrichtung, die Folgendes umfasst:
ein Leistungsspeicherelement (43), das in der Lage ist, Leistung zu speichern und zu laden und zu entladen;
einen Wandler (42), der Spannung zwischen einem Gleichstrom-Leistungsversorgungssystem und dem Leistungsspeicherelement umwandelt;
eine Spannungsdetektionseinheit (45), die eine Leitungsspannung des Gleichstrom-Leistungsversorgungssystems durch den Wandler detektiert;
eine Laderaten-Detektionseinheit (44), die einen Ladezustand des Leistungsspeicherelements als eine Laderate [%] detektiert;
eine Speichereinheit, die eine Tabelle (47) speichert, die eine Beziehung zwischen einer Leitungsspannung und einem Ladezustand für Lade- und Entlade-Kennlinien (31, 32, 33, 34) definiert, wobei jede von den Kennlinien in Ladezustand-Abschnittsbereichen eingestellt sind, wobei die Abschnittsbereiche einen Ladebetragsbereich angeben, der in der Lage ist, Leistung in dem Leistungsspeicherelement zu speichern, wobei die Ladekennlinie (51) eine erste Spannung (31) zum Beginnen des Ladens und/oder eine zweite Spannung (32) zum Beginnen des Ladens mit einem Höchststrom angibt, wobei die Entladekennlinie (61; 62) eine dritte Spannung (33) zum Beginnen des Entladens und/oder eine vierte Spannung (34) zum Beginnen des Entladens mit einem Höchststrom angibt; und
eine Stromsteuereinheit (48), die eine Kennlinie gemäß dem durch die Laderaten-Detektionseinheit detektierten Ladezustand des Leistungsspeicherelements und der durch die Spannungsdetektionseinheit detektierten Leitungsspannung von der Tabelle auswählt, jede in der ausgewählten Kennlinie definierte Spannung als einen Steuerungspunkt (21; 22; 23; 24) einer Lade/Entlade-Steuerungskennlinie zum Laden und Entladen in/von dem Leistungsspeicherelement einstellt und das Laden und Entladen zwischen dem Gleichstrom-Leistungsversorgungssystem und dem Leistungsspeicherelement durch den Wandler gemäß der durch die Spannungsdetektionseinheit detektierten Leitungsspannung des Gleichstrom-Leistungsversorgungselements gemäß der Lade/Entlade-Steuerungskennlinien durchführt,
wobei die Tabelle (47) Folgendes umfasst:
eine erste Ladekennlinie (51) im 70-75%-Abschnittsbereich, die eine Kennlinie zum Erhöhen der ersten Spannung (31), wenn der Ladezustand zunimmt, und/oder eine Kennlinie zum Erhöhen der zweiten Spannung (32) umfasst, wenn der Ladezustand zunimmt;
eine erste Entladekennlinie (61) in dem 25-35%-Abschnittsbereich, die eine Kennlinie zum Senken der dritten Spannung (33), wenn der Ladezustand abnimmt, und/oder eine Kennlinie zum Senken der vierten Spannung (34) umfasst, wenn der Ladezustand abnimmt; und
eine zweite Entladekennlinie (62) im 60-65%-Abschnittsbereich, die zwischen der ersten Ladekennlinie (51) und der ersten Entladekennlinie (61) bereitgestellt ist und sowohl eine Kennlinie zum Erhöhen der dritten Spannung (33), wenn der Ladezustand zunimmt, als auch eine Kennlinie zum Erhöhen der vierten Spannung (34) bis zu einer maximalen Entladeanfangsspannung umfasst, wenn der Ladezustand zunimmt.

2. Leistungsspeichervorrichtung nach Anspruch 1, wobei die Tabelle ferner eine dritte Lade/Entladekennlinie (73) umfasst, die zwischen der zweiten Entladekennlinie (62) und der ersten Ladekennlinie (61) bereitgestellt ist, um: die erste Spannung (31) und/oder die zweite Spannung (32); und die dritte Spannung (33) und/oder die vierte Spannung (34) unabhängig vom Ladezustand konstant zu halten.

## Revendications

1. Dispositif d'accumulation d'énergie comprenant :
un élément d'accumulation d'énergie (43) capable d'accumulation d'énergie et de chargement et déchargement ;
un convertisseur (42) convertissant une tension entre un système d'alimentation d'énergie à courant continu et l'élément d'accumulation d'énergie ;
une unité de détection de tension (45) détectant une tension de ligne du système d'alimentation d'énergie à courant continu par l'intermédiaire du convertisseur ;
une unité de détection de taux de chargement (44) détectant un état de charge de l'élément d'accumulation d'énergie en tant qu'un taux de chargement [%] ;
une unité de mémorisation qui mémorise une table (47) définissant une relation entre une tension de ligne et un état de charge pour des caractéristiques de charge et de décharge (31, 32, 33, 34), où chacune des caractéristiques est réglée dans des plages sectionnelles d'état de charge, les plages sectionnelles indiquant une plage de quantité de charge capable d'accumulation d'énergie dans l'élément d'accumulation d'énergie, la caractéristique de charge (51) indiquant une première tension (31) pour commencer un chargement et/ou une deuxième tension (32) pour commencer un chargement avec un courant maximal, la caractéristique de décharge (61 ; 62) indiquant une troisième tension (33) pour commencer un déchargement et/ou une quatrième tension (34) pour commencer un déchargement avec un courant maximal ; et
une unité de commande de courant (48) sélectionnant une caractéristique en fonction de l'état de charge de l'élément d'accumulation d'énergie détecté par l'unité de détection de taux de chargement et de la tension de ligne détectée par l'unité de détection de tension à partir de la table, réglant chaque tension définie dans la caractéristique sélectionnée en tant qu'un point de commande (21 ; 22 ; 23 ; 24) d'une caractéristique de commande de charge/décharge pour le chargement de l'élément d'accumulation d'énergie/le déchargement de l'élément d'accumulation d'énergie, et exécutant une charge et une décharge entre le système d'alimentation d'énergie à courant continu et l'élément d'accumulation d'énergie par l'intermédiaire du convertisseur en fonction de la tension de ligne du système d'alimentation d'énergie à courant continu détectée par l'unité de détection de tension en fonction des caractéristiques de commande de charge/décharge,
dans lequel la table (47) inclut :
une première caractéristique de charge (51) dans la plage sectionnelle de 70 à 75 % incluant une caractéristique d'augmentation de la première tension (31) au fur et à mesure de l'augmentation de l'état de charge, et/ou une caractéristique d'augmentation de la deuxième tension (32) au fur et à mesure de l'augmentation de l'état de charge ;
une première caractéristique de décharge (61) dans la plage sectionnelle de 25 à 35 %, incluant une caractéristique de réduction de la troisième tension (33) au fur et à mesure de la réduction de l'état de charges et/ou une caractéristique de réduction de la quatrième tension (34) au fur et à mesure de la réduction de l'état de charge ; et
une deuxième caractéristique de décharge (62) dans la plage sectionnelle de 60 à 65 % prévue entre la première caractéristique de charge (51) et la première caractéristique de décharge (61) et incluant une caractéristique d'augmentation de la troisième tension (33) au fur et à mesure de l'augmentation de l'état de charge et une caractéristique d'augmentation de la quatrième tension (34) jusqu'à une tension de début de décharge maximale au fur et à mesure de l'augmentation de l'état de charge.

2. Dispositif d'accumulation d'énergie selon la revendication 1, dans lequel la table inclut en outre une troisième caractéristique de charge/décharge (73) prévue entre la deuxième caractéristique de décharge (62) et la première caractéristique de charge (61) pour maintenir : la première tension (31) et/ou la deuxième tension (32) ; et la troisième tension (33) et/ou la quatrième tension (34) constantes indépendamment de l'état de charge.
